Europäisches Patentamt

European Patent Office

Office européen des brevets

(19)

(11) Veröffentlichungsnummer: **0 071 015**
**B1**

(12) # EUROPÄISCHE PATENTSCHRIFT

(45) Veröffentlichungstag der Patentschrift:
26.02.86

(51) Int. Cl.⁴: **H 01 M 12/06**, H 01 M 2/40,
H 01 M 12/02

(21) Anmeldenummer: **82105448.3**

(22) Anmeldetag: **22.06.82**

(54) **Metall-Luft-Zelle.**

(30) Priorität: **24.07.81 DE 3129248**

(43) Veröffentlichungstag der Anmeldung:
**09.02.83 Patentblatt 83/6**

(45) Bekanntmachung des Hinweises auf die Patenterteilung:
**26.02.86 Patentblatt 86/9**

(84) Benannte Vertragsstaaten:
**FR GB IT SE**

(56) Entgegenhaltungen:
**DE - B - 2 114 312**
**US - A - 3 666 561**

**ULLMANNS ENCYKLOPÄDIE DER TECHNISCHEN CHEMIE, 4. Auflage, 1973, Band 3 "Verfahrenstechnik II und Reaktionsapparate" VERLAG CHEMIE GMBH, Weinheim DE Seiten 172, 173**
**RUDOLF KINZELBACH "Stalakkumulatoren", 1968 VARTA AKTIENGESELLSCHAFT, Frankfurt/Main, DE Seiten 30, 36, 37**

(73) Patentinhaber: **Accumulatorenwerke Hoppecke Carl Zoellner & Sohn GmbH & Co. KG, Bontkirchener Strasse 1 Postfach 1140, D-5790 Brilon 2 (DE)**

(72) Erfinder: **Ruch, Jean, Dr., An der Lanfert 8, D-5790 Brilon 1 (DE)**
Erfinder: **Katryniok, Detlef, Dr. Dipl.-Chem., Alexanderstrasse 8, D-5790 Brilon 1 (DE)**
Erfinder: **Pack, Hugo, Willingerstrasse 10, D-5790 Brilon 4 (DE)**

(74) Vertreter: **Patentanwälte Dipl.-Ing. Alex Stenger Dipl.-Ing. Wolfram Watzke Dipl.-Ing. Heinz J. Ring, Kaiser-Friedrich-Ring 70, D-4000 Düsseldorf 11 (DE)**

## Beschreibung

Die Erfindung betrifft eine Metall-Luft-Zelle, bestehend aus einer verbrauchbaren Metallelektrode flächiger Form, die in einen den Elektrolyten enthaltenden Behälter hineinragt, wobei mit Abstand zu deren Arbeitsfläche eine Gas-Diffusionselektrode angeordnet ist, die frei vom Gas anspülbar ist.

Bekannt ist eine mit Meerwasser als Elektrolyt arbeitende Metall-Luft-Zelle, deren Metallelektrode eine flächige Form besitzt und in einen den Elektrolyten enthaltenden Behälter hineinragt. Zwei Gas-Diffusions-Elektroden sind ihren Flachseiten, die die Arbeitsflächen darstellen, mit Abstand zugeordnet derart, daß sie frei von der Umgebungsluft anspülbar sind. Nachteilig ist bei dieser bekannten Metall-Luft-Zelle, daß das System hinsichtlich der Leistungsabgabe begrenzt ist. Insbesondere macht sich dabei negativ bemerkbar, daß die durch Konvektion erzielte Elektrolytumwälzung und Bespülung der Elektroden unzureichend ist.

Der Erfindung liegt in Anbetracht dieses Standes der Technik die Aufgabe zugrunde, ein galvanisches Element, insbesondere eine Metall-Luft-Zelle der eingangs genannten Art derart zu verbessern, daß höhere Leistungen durch Intensivierung des Stofftransportes ohne Verwendung von Pumpen oder dgl. dem System nicht zugehöriger Hilfsaggregate erzielt werden.

Die Aufgabe ist erfindungsgemäß dadurch gelöst, daß der bei der elektrochemischen Umsetzung entstehende Wasserstoff in dem den Elektrolyten enthaltenden Behälter gesammelt und der sich aufbauende Druck zum Transport des Elektrolyten ausgenutzt wird. Auf diese Weise wird durch die Wasserstoffentwicklung ein Betriebsmittel für den Stofftransport bereitgestellt, der aktiv die Arbeitsweise der ansonsten nur auf Konvektion basierenden Elektrolytumwälzung unterstützt und in einer Weise fördert, daß überraschend höhere Leistungen ohne systemfremde Hilfen erzielbar sind.

Hierfür ist im Behälteroberteil ein gasdichter Sammelraum für das bei der elektrochemischen Umsetzung entstehende Gas, insbesondere den Wasserstoff, ausgebildet, an den ein gasdruckabhängig beaufschlagtes Rohrsystem zum Transport von Elektrolytflüssigkeit aus dem oberen Behälterbereich in den unteren Behälterbereich angeschlossen ist. Die Wirkung ist dabei derart, daß das im Sammelraum entstehende Gaspolster bei Erreichen eines bestimmten Druckes den Elektrolyten durch das Rohrsystem vom oberen Behälterbereich in den unteren Behälterbereich "pumpt", womit die konvektive Umwälzung aufgrund thermischer Kraft unterstützt wird.

Um den erzielten Pumpeneffekt zu verbessern bzw. jegliche Blasenbildung oder andere Störfaktoren zu vermeiden, ist gemäß einer zweckmäßigen Ausgestaltung der Erfindung vorgeschlagen, den Behälter gasdicht durch einen Deckel zu verschließen, der mittig die Metallelektrode geführt ist, dessen innere Erstreckung den Gassammelraum begrenzt und der außen oder mit dem Behälter eintegriert ein Überniveaugefäß trägt, von dem aus ein Rückleitungsrohr in den unteren Behälterbereich geführt ist. Das Überniveaugefäß ist zweckmäßigerweise durch einen hydrophoben Sperrabschluß belüftet.

Bei verschiedenen Ansendungsfällen besteht ein Interesse, die Zelle zunächst unaktiviert zu halten und erst bei Bedarf durch Füllung mit Elektrolytflüssigkeit zu aktivieren. Zu diesem Zweck ist gemäß einer vorteilhaften Verbesserung der Erfindung vorgeschlagen, an das Rückleitungsrohr einen flexiblen Hebe-Schlauch für die Elektrolytflüssigkeit mit einem zu öffnenden und zu schließenden Belüftungs- und Elektrolytauslaßverschluß anzuschließen. Durch Anheben des Hebe-Schlauchs wird Elektrolytflüssigkeit über das Rohrsystem in den Behälter bis zu der zur Aktivierung notwendigen Füllhöhe eingebracht und damit die Zelle gestartet. Es baut sich dann im Gs-Sammelraum aufgrund des freiwerdenden Wasserstoffs ein Druck auf, der die Elektrolytumwälzung durch das Rohrsystem erzwingt. Um die Zelle abzuschalten ist es bei dieser Ausführungsform notwendig, den Hebe-Schlauch wieder in seine ursprüngliche niedrige Position zu bringen, wodurch sich die Zelle in den Hebe-Schlauch hinein entleert und desaktiviert wird.

Eine besonders vorteilhafte Ausführungsform des Behälters besteht darin, diesen aus einem elektrolytbeständigen Metall, insbesondere Nikkel oder Edelstahl für alkalische Elektrolyten, herzustellen, der an beliebiger Stelle mit einem Stromkontakt versehen ist, wobei der zweite Kontakt als Fabne an der Metallelektrode ausgebildet ist. Der Behälter weist dabei in seinen den Arbeitsflächen der Metallelektrode gegenüberliegenden Flachseiten fensterartige Aussparungen auf, in die je eine mit hydrophober Sperrschicht versehene Gas-Diffusionselektrode eingesetzt ist. Die Verbindung der Gas-Diffusionselektrode mit dem Behälter kann durch Löten, leitfähige Metallverklebung oder eine Impulstechnik durchgeführt werden. Neben der besonders wirtschaftlichen Herstellungsweise, die diese zweckmäßige Ausführungsform der Metall-Luft-Zelle ermöglicht, ist vorteilhaft, daß die beiden Gas-Diffusionselektroden durch das Gehäuse parallelgeschaltet sind und die Stromabgriffe ohne Kontaktrahmen oder dgl. Hilfselemente, leicht an das jeweilige Einsatzgebiet der Zelle anpaßbar, durchgeführt werden können.

Die Metallelektrode kann rechteckig ausgebildet sein und zumindest teilweise aus Aluminium, nämlich im Bereich der Arbeitsflächen, bestehen. Dagegen ist es zweckmäßig, am Übergang zur Fahne einen Korrosionsschutz, insbesondere in Form eines Kunststoff-Überzugs vorzusehen. Es ist in diesem Zusammenhang auch möglich, die Metallelektrode kombinativ aufzubauen aus einem mit dem jeweiligen Elektrolyten nicht (gasbildend) reagierenden Metall, das im aktiven Bereich der Elektrode mit einem gasbildend reagierenden Metall kombiniert ist, so daß auf diese Weise Korrosionsgefahren am Behälterausgang

2

bzw. dem Bereich der Fahne vermieden sind.

Die Metallelektrode kann zur Verhinderung einer Partikelablösung von einem Kunststoffnetz umgeben sein, das gleichzeitig als Separator zur Vermeidung von Kurzschlüssen ausgebildet sein kann.

Insgesamt wird mit der Erfindung eine effektive Elektrolytumwälzung ohne systemfremde Hilfen, wie Pumpen, erzielt und damit die Zellenleistung erheblich gesteigert. Die Zelle ist in einfacher Weise aktivierbar, jederzeit abschaltbar und reaktivierbar, mechanisch nachladbar und hinsichtlich ihres Wärmehaushalts über das Gehäuse in konstruktiv einfacher Weise optimierbar. Sie eignet sich auch zur Verwendung als elektrochemischer Energie-Reservetank Z.B. für die Aufladung von Sekundärbatterien oder als Notstromaggregat.

Weitere Einzelheiten, Merkmale und Vorteile des Gegenstandes der Erfindung ergeben sich aus der nachfolgenden Beschreibung der zugehörigen Zeichnung, in der eine bevorzugte Ausführungsform einer Metall-Luft-Zelle schematisch dargestellt ist. In der Zeichnung zeigt:

Fig. 1. eine Aluminium-Luft-Zelle in perspektivischer Ansicht,
Fig. 2 einen Schnitt gemäß Pfeil II der Fig. 1 und

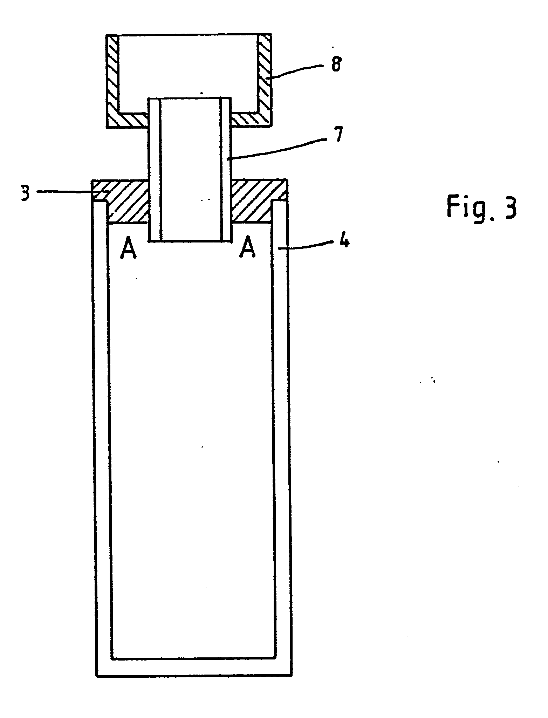

Fig. 3 einen Schnitt gemäß Pfeil III der Fig. 1.

Die dargestellte Aluminium-Luft-Zelle besteht aus einer Anode 1, die eine verbrauchbare Aluminiumelektrode flächiger, rechteckiger Form darstellt, einem Behälter 4 aus Nickel zur Aufnahme eines alkalischen Elektrolyten, insbesondere KOH, sowie zwei auf den Flachseiten des behälters 4 einander gegenüberliegend angeordnete Gas-Diffusionselektroden 5 in den Ausführungsform als Luftelektroden. Der Behälter 4 ist im Prinzip ein rechteckiger Kasten, dessen obere Öffnung durch einen elektrisch isolierten Deckel 3 dicht verschlossen ist. Der Deckel 3 hält mittig die Anode 1, an der einstückig ee Fahne 13 als Stromabgriff mit einer Bohrung zum Anschluß eines Kabels ausgebildet ist. Der Deckel 3 weist ferner den Anschluß eines weiter unten beschriebenen Rohrleitungssystems elektrolytdicht und gasdicht auf.

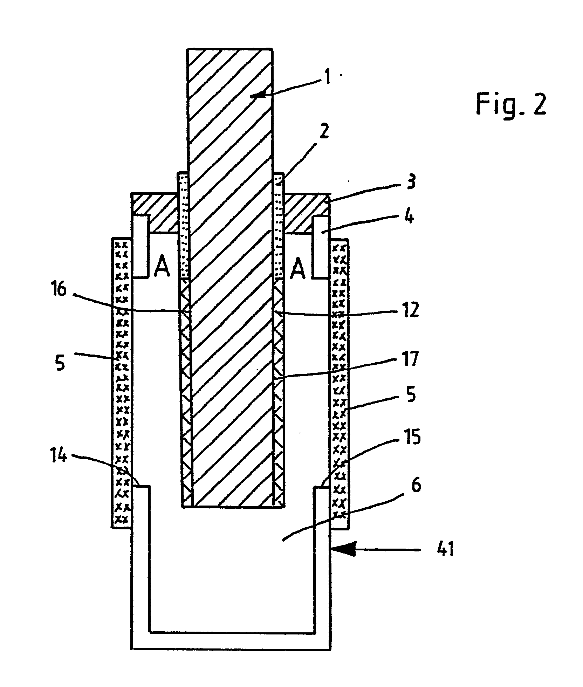

Die einander gegenüberliegenden Breit- oder Flachseiten des Behälters 4 weisen fensterartige Aussparungen 14, 15 auf, die außen von den Gas-Diffusionselektroden 5 überdeckt werden, wie insbesondere Fig. 2 der Zeichnung entnehmbar ist. Die Gas-Diffusionselektroden 5 sind durch eine leitfähige Metallverklebung dicht mit dem Behälter 4 verbunden und stellen im Ausführungsbeispiel Luftelektroden mit hydrphober Sperrschicht aus membranfolienartig aufgebrachtem Polytetrafluoräthylen dar, so daß sie ein- seitig von außen nach innen gasdurchlässig sind und andererseits von innen nach außen flüssigkeitsdicht ausgeführt sind.

Die Gas-Diffusionselektroden 5 stehen in einem Abstand direkt gegenüberliegend den beiden aktiven Flächen 16, 17 der Anode 1 zur Förderung der elektrochemischen Umsetzung. Oberhalb der Gas-Diffusionselektroden 5 befindet sich im Oberteil des Behälters 4 ein Gas-Sammelraum A, in welchem sich der bei der elektrochemischen Umsetzung entstehende Wasserstoff sammeln kann.

Das eingangs genannte Rohrsystem, welches an den behälter 4 durch den Deckel 3 oben angeschlossen ist, besteht aus einem Ableitungsrohrstutzen 7, dessen im Behälter 4 angeordnetes offenes Ende die untere Begrenzung des Gas-Sammelraums A darstellt, Sein aus dem Behälter 4 herausragender Teil mündet in einem Überniveaugefäß 8, in welchem gestrichelt die Niveauhöhe an Elektrolyt angedeutet ist. Das Überniveaugefäß 8 ist belüftet, jedoch zum Schutz gegen einen Elektrolytaustritt mit einem zeichnerisch nicht gesondert dargestellten hydrophoben Sperrabschluß versehen.

An das Überniveaugefäß 8 ist ein Rückleitungsrohr 9 angeschlossen, welches in unteren Behälterbereich B mündet, Zusätzlich ist an das Rückleitungsrohr ein flexibler Hebe-Schlauch 10 angeschlossen, der in einem von Hand zu öffnenden Verschluß 11 endet.

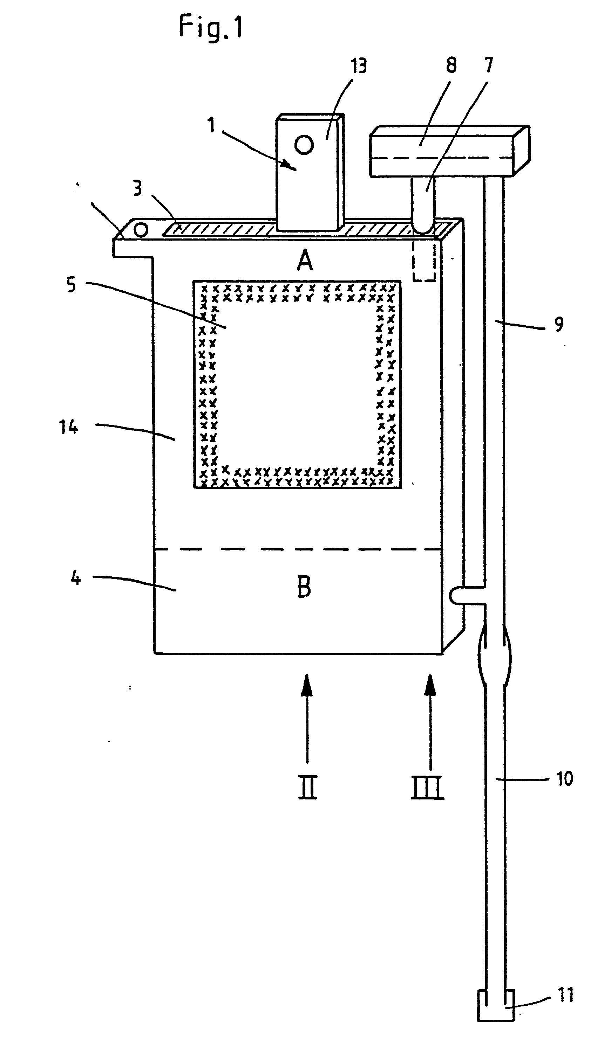

Schließlich weist der Behälter 4 einen nach Art einer Kontaktfahne ausgebildeten Stromabgriff 18 auf, der gemäß Fig. 1 in Deckelhöhe angebracht ist, jedoch aufgrund der Ausbildung des Behälters aus Metall sowie der Parallelschaltung der beiden Gas-Diffusionselektroden durch das metallische Gehäuse an beliebiger Stelle des Behälters angebracht werden kann.

Die Anode 1 weist im Bereich des Deckels 3 sowie des Gas-Sammelraums A einen korrisionsschützenden Überzug 2 auf, an den sich ein Kunststoffnetz 12 anschließt, das auch als Separator zur Trennung der Elektrode 1 von den Elektroden 5 ausgebildet sein kann. Im Ausführungsbeispiel ist dafür ein Polypropylen-Siebgewebe vorgesehen.

Die beschriebene Zelle ist im unaktivierten Zustand teilweise mit Elektrolytflüssigkeit gefüllt, etwa derart, daß der untere Behälterbereich B einen Flüssigkeitsstand bis in Höhe des Pfeils 41 der Fig. 2 der Zeichnung aufweist. Darüber hinaus befindet sich Elektrolyt bis zur gleichen Höhe im Rohrsystem, insbesondere folglich im Hebe-Schlauch 10, der ein Elektrolytreservoir darstellt. Die Aktivierung der Zelle erfolgt durch das Anheben des flexiblen Hebe-Schlauchs 10 über dans Überniveaugefäß 8 hinaus, so daß er sich in den Behälter 4 entleert bis die Füllhöhe, die im Überniveaugefäß gestrichelt angedeutet ist, erreicht ist. Zu diesem Aktivieren ist der Verschluß 11, der als Belüftungs- und Elektrolytauslaßklappe ausgebildet ist, zu öffnen.

Der Hebe-Schlauch 10 wird in seiner hochgehobenen Stellung belassen und die Zelle kann die gewünschten elektrochemischen Umsetzungen durchführen, wobei die Wasserstoffenwicklung ausgenutzt wird, im Gas-Sammelraum A ein Wasserstoffpolster aufzubauen. Der dadurch entstehende Druck im System wird ausgenutzt, Elektrolytflüssigkeit durch den Ableitungsrohrstutzen 7 eund das Überniveaugefäß durch das Rückleitungsrohr 9 aus dem oberen Behälterbereich zurück in den unteren Behälterbereich B zu transportieren. Zum Abschalten der Zelle ist es allein erforderlich, den Hebe-Schlauch 10 in seine untere Position gemäß Fig. 1 der Zeichnung zu bringen, wodurch sich die Zelle in den Hebe-Schlauch hinein entleert und derart desaktiviert wird.

Mit einer Zelle der beschriebenen Art, die 100 cm² Elektrodenfläche aufweist, wurden im Luftbetrieb mit Aluminium-Anode und 70 cm³ Elektrolytvolumen folgende Daten erreicht:

$I = 20\,A$
$i = 0{,}20\,A \times cm^{-2}$
$T = 50°C$

Die Anfangsklemmspannung betrug 1,05 V.

Bezugszeichenliste:

| | |
|---|---|
| 1 | Anode |
| 2 | Überzug |
| 3 | Deckel |
| 4 | Behälter |
| 5 | Gas-Diffusionselektroden |
| 6 | Behälterinnenraum |
| 7 | Ableitungsrohrstutzen |
| 8 | Überniveaugefäß |
| 9 | Rückleitungsrohr |
| 10 | Hebe-Schlauch |
| 11 | Verschluß |
| 12 | Kunststoffnetz |
| 13 | Fahne |
| 14 | Aussparung |
| 15 | Aussparung |
| 16 | aktive Fläche |
| 17 | aktive Fläche |
| 18 | Stromabgriff |
| A | Gas Sammelraum |
| B | unterer Behälterbereich |
| 41 | Pfeil |

**Patentansprüche**

1. Metall-Luft-Zelle, bestehend aus einer verbrauchbaren Metallelektode flächiger Form, die in einen den Elektrolyten enthaltenden Behälter hineinragt, wobei mit Abstand zu deren Arbeitsfläche eine Gas-Diffusionselektrode angeordnet ist, die frei vom Gas anspülbar ist, dadurch gekennzeichnet, daß im Oberteil des Behälters (4) ein gasdichter Sammelraum (A) für das bei der elektrochemischen Umsetzung entstehende Gas, insbesondere den Wasserstoff, ausgebildet ist, an den ein gasdruckabhängig beaufschlagtes Rohrsystem (7, 8, 9, 10) zum Transport von Elektrolytflüssigkeit aus dem oberen Behälterbereich in den unteren Behälterbereich (B) angeschlossen ist, wobei der bei der elektrochemischen Umsetzung entstehende Wasserstoff in dem den Elektrolyten enthaltenden Behälter (4) gesammelt und der sich aufbauende Druck zum Transport des Elektrolyten ausgenutzt werden kann.

2. Metall-Luft-Zelle nach Anspruch 1 dadurch gekennzeichnet, daß der Behälter (4) gasdicht durch einen Deckel (3) isoliert verschlossen ist, der mittig die Metallelektrode (1) hält und durch den ein Ableitungsrohrstutzen (7) in den Behälter (4) geführt ist, dessen innere Erstreckung den Gassammelraum (A) begrenzt und der außen oder mit dem Behälter (4) integriert ein Überniveaugefäß (8) trägt, von dem aus ein Rückleitungsrohr (9) in den unteren Behälterbereich (B) geführt ist.

3. Metall-Luft-Zelle nach Anspruch 2, dadurch gekennzeichnet, daß das Überniveaugefäß (8) durch einen hydrophoben Sperrabschluß belüftet ist.

4. Metall-Luft-Zelle nach einem der Ansprüche 1 bis 3, dadurch gekennzeichnet, daß an das Rückleitungsrohr (9) ein flexibler Hebe-Schlauch (10) für die Elektrolytflüssigkeit mit einem zu öffenden und zu schließenden Belüftungs- und Elektrolytauslaßverschluß (11) angeschlossen ist.

5. Metall-Luft-Zelle nach einem der Ansprüche 1 bis 4, dadurch gekennzeichnet, daß der Behälter aus einem elektrolytbeständigen Metall, insbesondere Nickel oder Edelstahl für alkalische Elektrolyten, hergestellt ist, der an beliebiger Stelle mit einem Stromkontakt (18) versehen ist, wobei der zweite Stromkontakt als Fahne (13) an der Metallelektrode (1) ausgebildet ist.

6. Metall-Luft-Zelle nach Anspruch 5, dadurch gekennzeichnet, daß der Behälter (4) in seinen den aktiven Flächen (16, 17) der Metallelektrode (1) gegenüberliegenden Flachseiten fensterartige Aussparungen (14, 15) aufweist, in die je eine mit hydrophober Sperrschicht versehene Gas-Diffusionselektrode (5) eingesetzst ist.

7. Metall-Luft-Zelle nach Anspruch 6, dadurch gekennzeichnet, daß die Gas-Diffusionselektroden (5) mit dem Gehäuse (4) durch eine leitfähige Metallverklebung verbunden sind.

8. Metall-Luft-Zelle nach einem der Ansprüche 1 bis 7, dadurch gekennzeichnet, daß die Metallelektrode (1) rechteckig ausgebildet ist und am Übergang zur Fahne (13) einen korrosionsschützenden Überzug (2) aufweist.

9. Metall-Luft-Zelle nach einem der Ansprüche 1 bis 8, dadurch gekennzeichnet, daß die Metallelektrode zumindest im Bereich ihrer aktiven Flächen von einem Kunststoffnetz, insbesondere einem Polypropylen-Siebgewebe umgeben ist.

**Revendications**

1. Cellule métal-air, consituée d'une électrode métallique consommable (1) de forme plate qui pénètre dans un récipient (4) contenant l'électrolyte, une électrode de diffusion de gaz (5) qui peut être balayée librement par le gaz étant disposée à distance de la surface de travail (16, 17) de l'électrode métallique, caractérisée en ce qu'il est formé dans la partie supérieure du récipient (4) une chambre d'accumulation (A) étanche aux gaz pour le gaz dégagé lors de la conversion électrochimique, notamment pour l'hydrogène, un réseau de conduites tubulaires (7, 8, 9, 10) sollicité en fonction de la pression étant raccordé à cette chambre pour le transport de l'électrolyte liquide de la zone supérieure du récipient dans la zone inférieure (B) de ce récipient, l'hydrogène dégagé lors de la conversion électrochimique étant accumulé dans le récipient (4) contenant l'électrolyte et la pression qui s'établit étant utilisée pour le transport de l'électrolyte.

2. Cellule métal-air selon la revendication 1, caractérisée en ce que le récipient (4) est fermé de façon étanche auz gaz et isolée par un couvercle (3) qui maintient en son centre l'électrode métallique (1) et à travers lequel une tubulure de sortie (7) est guidée dans le récipient (4), la dimension intérieure de cette tubulure limitant la chambre d'accumulation de gaz (A), ladite tubulure portant un vase de trop-plein (8) disposé extérieurement ou intégré dans le récipient (4), une conduite tubulaire de retour (9) partant de ce vase pour aller dans la zone inférieure (B) du récipient.

3. Cellule métal-air selon la revendication 2, caractérisée en ce que la vase de trop-plein (8) est ventilé par une fermeture d'arrêt hydrophobe.

4. Cellule métal-air selon l'une quelconque des revendications 1 à 3, caractérisée en ce qu'à la conduite tubulaire de retour (9) est raccordé un tube flexible levant (10) pour l'électrolyte liquide avec une fermeture (11) de ventilation et de sortie d'électrolyte que l'on ouvre et que l'on ferme.

5. Cellule métal-air selon l'une quelconque des revendications 1 à 4, caractérisée en ce que le récipient est fabriqué en un métal résistant à l'électrolyte, notamment en nickel ou en acier spécial pour les électrolytes alcalins, ce récipient étant muni en un emplacement quelconque d'un contact électrique (18), le second contact électrique étant agencé sous forme de languette (13) sur l'électrode métallique (1).

6. Cellule métal-air selon la revendication 5, caractérisé en ce que le récipient (4) présente sur ses côtés larges disposés en face des surfaces actives (16, 17) de l'électrode métallique (1) des évidements (14, 15) en forme de fenêtres, une électrode de diffusion de gaz (5) munie d'une couche d'arrêt hydrophobe étant introduite dans chacun de ces évidements.

7. Cellule métal-air selon la revendication 6, caractérisée en ce que les électrodes de diffusion de gaz (5) sont assemblées avec le boîtier (4) par un collage métallique conducteur.

8. Cellule métal-air selon l'une quelconque des revendications 1 à 7, caractérisée en ce que l'électrode métallique (1) est réalisée avec une forme rectangulaire et comporte un revêtement (2) de protection contre la corrosion au raccord avec la languette (13).

9. Cellule métal-air selon l'une quelconque des revendications 1 à 8, caractérisée en ce que l'électrode métallique (1) est, au moins dans la zone de ses surfaces actives (16, 17), entourée par un grillage en matière plastique (12), notamment par un treillis de tamisage en polypropylène.

## Claims

1. Metal-air-cell, consisting of a consumable metal-electrode of flat shape, which projects into a housing containing the electrolyte, wherein a gas-diffusion-electrode, which is flushable free of gas, is disposed with a spacing from its working surface, characterised in that in the upper part of the housing (4) a gas-tight collecting space (A) is formed for the gas, especially the hydrogen, formed as a result of the electrochemical reaction, to which space a pipe system (7, 8, 9, 10) admission to which is gas pressure dependent, is connected for the transport of electrolyte liquid from the upper region of the housing into the lower region of the housing (B), whereby the hydrogen produced by the electrochemical reaction in the housing (4) containing the electrolyte can be collected and the pressure build up utilised for the transport of the electrolyte.

2. Metal-air-cell according to claim 1, characterised in that the housing (4) is gas-tightly closed by means of an insulated cover (3), which holds the metal electrode (1) centrally and through which a discharge pipe branch (7) is guided into the housing (4), of which the inner end terminates in the gas collecting space (A) and the outer end is integral with the housing (4) or carries an upper level chamber (8), from which a return pipe (9) is guided into the lower housing region (B).

3. Metal-air-cell according to claim 2, characterised in that the upper level chamber (8) is vented by means of a hydrophobic seal.

4. Metal-air-cell according to one of claims 1 to 3, characterised in that a flexible syphon hose (10) for the electrolyte liquid is connected to the return pipe for opening and closing a ventilation and electrolyte discharge chamber (11).

5. Metal-air-cell according to one of claims 1 to 4, characterised in that the housing is produced from an electrolyte resistant metal, particularly nickel or refined steel for alkaline electrolytes, the housing is provided with a current contact (18) at any position, whereby the second current contact is formed as a lug (13) on the metal electrode (1).

6. Metal-air-cell according to claim 5, characterised in that the housing (4) has on its flat sides adjacent the active surfaces (16, 17) of the metal electrode (1) window like openings (14, 15), in each of which a gas-diffusion electrode (5) provided with hydrophobic seal layer is inserted.

7. Metal-air-cell according to claim 6, characterised in that the gas-diffusion electrodes (5) are connected with the housing (4) by means of a conductive metal adhesive.

8. Metal-air-cell according to one of claims 1 to 7, characterised in that the metal electrode (1) is constructed rectangular and at the passage of the lug (13) has a corrosion protective coating (2).

9. Metal-air-cell according to one of claims 1 to 8, characterised in that the metal electrode is surrounded at least in the region of its active surfaces by a synthetic net, especially a polypropylene gauze screen.

Fig.1

Fig. 2

Fig. 3